# EUROPÄISCHE PATENTANMELDUNG

(11) **EP 2 996 222 A1**
(43) Veröffentlichungstag der Anmeldung: **16.03.2016**
(21) Anmeldenummer: 14184233.6
(22) Anmeldetag: 10.09.2014
(51) Int. Cl.: H02K 1/02, H02K 1/27, H02K 1/24

(54) **Rotor für eine elektrische Maschine**

(71) Anmelder: Siemens Aktiengesellschaft, 80333 München (DE)
(72) Erfinder: Fischer, Ralf, 90419 Nürnberg (DE); Petermaier, Korbinian, 80799 München (DE); Vollmer, Rolf, 36129 Gersfeld (DE)

(57) **Zusammenfassung**

Die Erfindung betrifft einen Rotor für eine elektrische Maschine, wobei der Rotor um eine Rotationsachse drehbar ist und wobei der Rotor an seiner radialen Außenfläche eine Mehrzahl von Permanentmagneten (1) zur Ausbildung von zumindest einem Magnetpolpaar, vorzugsweise zwei oder mehr Magnetpolpaaren. Weiterhin betrifft die Erfindung eine elektrische Maschine aufweisend einen derartigen Rotor. Um die Ankerrückwirkung bei einer elektrischen Maschine aufweisend einen derartigen Rotor zu reduzieren, wird vorgeschlagen, dass der Rotor radial weiter innen als die Mehrzahl von Permanentmagneten (1) zumindest abschnittweise ein anisotrop weichmagnetisches Material (2) mit einer leichten Richtung (3) und einer schweren Richtung (4) aufweist.

## Beschreibung

Die Erfindung betrifft einen Rotor für eine elektrische Maschine, wobei der Rotor um eine Rotationsachse drehbar ist und wobei der Rotor an seiner radialen Außenfläche eine Mehrzahl von Permanentmagneten zur Ausbildung von zumindest einem Magnetpolpaar, vorzugsweise zwei oder mehr Magnetpolpaaren, aufweist. Weiterhin betrifft die Erfindung eine elektrische Maschine aufweisend einen derartigen Rotor.

Ein derartiger Rotor kommt beispielsweise bei permanenterregten Synchronmaschinen zum Einsatz.

Die Ankerrückwirkung bei elektrischen Maschinen, insbesondere bei permanenterregten Synchronmaschinen, beeinflusst ungünstig das Sättigungsverhalten, reduziert die maximale Leistung bei einer gegebenen Maximalspannung, führt zu einem erhöhten Strombedarf und reduziert die Regeldynamik. Sie führt zu einem erhöhten Bedarf an Magneten hoher Koerzitivfeldstärke.

Bisher wurden Maschinen mit vergleichsweise dicken Magneten und vergleichsweise großen Luftspalten gebaut, um die Ankerrückwirkung gering zu halten.

Aus der EP 2 704 294 A1 ist ein Rotor einer permanenterregten Synchronmaschine bekannt, wobei der Rotor ein Blechpaket aufweist und wobei an der im Wesentlichen zylindrischen Oberfläche des Rotors pro magnetischem Pol zumindest ein Permanentmagnet angeordnet ist.

Der Erfindung liegt die Aufgabe zugrunde, die Ankerrückwirkung bei einer elektrischen Maschine aufweisend einen Rotor der eingangs genannten Art zu reduzieren.

Diese Aufgabe wird durch einen Rotor der eingangs genannten Art dadurch gelöst, dass der Rotor radial weiter innen als die Mehrzahl von Permanentmagneten zumindest abschnittweise ein anisotrop weichmagnetisches Material mit einer leichten Richtung und einer schweren Richtung aufweist.

Weiterhin wird diese Aufgabe durch eine elektrische Maschine aufweisend einen derartigen Rotor gelöst.

Bei dem vorgeschlagenen Rotor ist somit vorgesehen, unter den Permanentmagneten Material mit einer weichmagnetischen Anisotropie anzuordnen. Für einen jeweiligen Magnetpol ist zumindest ein Permanentmagnet vorgesehen. Im Rahmen des vorliegenden Dokumentes werden Werkstoffe und Materialien dabei als weichmagnetisch verstanden, wenn sie eine Koerzitivfeldstärke von weniger als 100 kA/m aufweisen. Die weichmagnetische Anisotropie des Materials macht sich dadurch bemerkbar, dass das Material entlang unterschiedlicher Richtungen unterschiedlich große magnetische Permeabilitäten aufweist. So weist das weichmagnetisch anisotropische Material entlang seiner so genannten leichten Richtung eine höhere magnetische Permeabilität auf als entlang seiner so genannten schweren Richtung. Insbesondere ist die leichte Richtung dabei im Wesentlichen senkrecht zur schweren Richtung, wobei auch ein Winkel zwischen der leichten und der schweren Richtung von 75° bis 90°, insbesondere von 50° bis 90°, vorliegen kann. Dieser Winkelbereich soll auch an anderen Stellen des vorliegenden Dokumentes zugrundegelegt werden, an welchen zwei Richtungen ebenfalls im Wesentlichen senkrecht zueinander ausgerichtet sein sollen. Vorteilhafterweise weist das weichmagnetisch anisotropische Material dabei eine geeignete hohe Sättigungsflussdichte auf.

Vorzugsweise ist die elektrische Maschine derart ausgelegt, dass sie mit elektrischen Leistungen bis in den Kilowatt-Bereich betrieben werden kann, wobei die elektrische Maschine insbesondere mit mehreren 10 kW elektrischer Leistung betreibbar ist.

Insbesondere durch die Kombination der Mehrzahl von Permanentmagneten an der radialen Außenfläche des Rotors mit dem anisotrop weichmagnetischen Material, welches radial weiter innen als die Permanentmagnete angeordnet ist, ergeben sich eine Reihe von Vorteilen. Denn durch eine passende Anordnung der Permanentmagnete und des weichmagnetisch anisotropischen Materials sowie insbesondere seiner leichten Richtung und seiner schweren Richtung kann der Magnetfluss besonders vorteilhaft beeinflusst werden, so dass die Ankerrückwirkung im Vergleich zu herkömmlichen Maschinen reduziert wird.

Durch die vergleichsweise geringe Ankerrückwirkung ist beispielsweise der Scheinleistungsbedarf reduziert und der Leistungsfaktor cos(phi) größer im Vergleich zu herkömmlichen Maschinen. Somit erlaubt die geringere Ankerrückwirkung beispielsweise, einen kleineren Umrichter zur Speisung der elektrischen Maschine einzusetzen.

Von Vorteil ist weiterhin, dass die vergleichsweise geringe Ankerrückwirkung die Gegenfeldbelastung der Permanentmagnete reduziert. Dies ermöglicht den Einsatz von dünneren Permanentmagneten und Permanentmagneten mit geringerer Koerzitivfeldstärke. Insbesondere durch die vergleichsweise kleine, erforderliche Koerzitivfeldstärke können somit kostengünstigere Permanentmagnete mit einem reduzierten Gehalt an schweren Seltenen Erden (englisch "heavy rare earth", HRE) eingesetzt werden.

Der Vollständigkeit halber wird im Zusammenhang mit dem Einsatz von magnetisch anisotropen Materialien für elektrische Maschinen auf die Anwendung derartiger Materialien für Reluktanzmaschinen hingewiesen. So ist beispielsweise aus der GB 1 114 562 A eine dynamoelektrische Maschine in Form einer Reluktanzmaschine bekannt, welche einen Stator mit einer Statorwicklung und einen Rotor aufweist. Der Rotor umfasst magnetisches Material, welches Flusspfade für den durch die Statorwicklung erzeugten Fluss bereitstellt, wobei das magnetische Material derart angeordnet ist, das die Größe der entsprechenden Reluktanz abhängig von der Position des Rotors relativ zum Stator ist, wobei das magnetische Material als gestapeltes Blechpaket eines anisotropischen Materials vorliegt und sich die Bleche im Wesentlichen parallel zur Achse der Maschine erstrecken. Weiterhin ist aus der JP 4343281 B2 bzw. der JP H 11 055911 A ist ein Reluktanzmotor mit einem Rotor bekannt, wobei der Rotor eine gerade Anzahl von Magnetpolen und ein Material aufweist, welches Kristallkörner eines Stoffes aufweist, wobei die Kristallkörner aus Eisen oder einer Eisenlegierung sind und eine magnetische Anisotropie aufweisen.

Bei einer vorteilhaften Ausgestaltung der Erfindung sind das anisotrop weichmagnetische Material und die Mehrzahl von Permanentmagneten derart angeordnet, dass ein jeweiliger d-Magnetfluss entlang einer jeweiligen d-Achse verstärkt wird und ein jeweiliger q-Magnetfluss entlang einer jeweiligen q-Achse geschwächt wird.

Die d- bzw. q-Achse werden auch als direkte Achse bzw. Querachse bezeichnet, wobei der während des Betriebs der elektrischen Maschine vorliegende bzw. zu erwartende Magnetfluss entlang der d- bzw. q-Achse in den d- bzw. q-Magnetfluss komponentenweise zerlegt werden kann. Bekanntermaßen korreliert der d-Magnetfluss mit dem Drehmoment.

Betrachtet man einen Querschnitt durch den Rotor senkrecht zur Rotationsachse, so ist bei dem vorgeschlagenen Rotor die jeweilige d-Achse in der Regel entlang einer jeweiligen Geraden angeordnet, auf welcher die Rotationsachse und der jeweilig Magnetpol liegen. Entsprechend ist die jeweilige q-Achse in der Regel entlang einer jeweiligen Geraden angeordnet, auf welcher die Rotationsachse und die Mitte zwischen zwei benachbarten Magnetpolen liegen. Bei einer speziellen Ausgestaltung des Rotors kann die Lage der jeweiligen d- und q-Achse jedoch auch davon abweichen.

Der vorgeschlagene Rotor ist dabei derart ausgebildet, dass der jeweilige d-Magnetfluss verstärkt wird und der jeweilige q-Magnetfluss geschwächt wird. Insbesondere wird somit der jeweilige d-Magnetfluss durch den zumindest einen Permanentmagneten des jeweiligen Magnetpols hindurch verstärkt. Dabei bezieht sich die Verstärkung bzw. Schwächung auf einen Rotor mit einem vergleichbaren weichmagnetischen Material, welches jedoch keine magnetische Anisotropie aufweist.

Die Schwächung des jeweiligen q-Magnetflusses bedeutet eine Erhöhung des magnetischen Widerstandes für den q-Magnetfluss. Dies hat den Vorteil, dass sich das Ankerquerfeld weniger stark ausbilden kann, wodurch insbesondere der Eisenkreis weniger gesättigt wird und die Drehmoment-Strom-Linearität verbessert wird. Ein besseres Regelverhalten und höhere, erreichbare Drehmomente sind die Folge. Weiterhin senkt der höhere magnetische Widerstand für den q-Magnetfluss die Querinduktivität Lq. Somit ist der Spannungsabfall an der Querreaktanz geringer, wodurch ein höherer Strom getrieben werden kann und somit höhere Drehmomente und Leistungen an der Spannungsgrenze möglich sind.

Bei einer weiteren vorteilhaften Ausgestaltung der Erfindung ist die leichte Richtung des anisotrop weichmagnetischen Materials zumindest abschnittsweise im Wesentlichen entlang einer jeweiligen d-Achse ausgerichtet.

Zwischen der leichten Richtung und der während des Betriebs der elektrischen Maschine vorliegenden bzw. zu erwartenden, jeweiligen d-Achse bzw. dem entsprechenden d-Magnetfluss liegt somit vorzugsweise ein Winkel von 0°. Beispielsweise kann für den Rotor der zu erwartende bzw. vorliegende d-Magnetfluss, insbesondere durch Messung, Berechnung oder Simulation, ermittelt werden. Im Rahmen des vorliegenden Dokumentes soll die leichte Richtung jedoch auch dann als im Wesentlichen entlang der jeweiligen d-Achse ausgerichtet gelten, wenn ein Winkel von 0° bis 15°, insbesondere von 0° bis 40°, zwischen der leichten Richtung und der jeweiligen d-Achse bzw. dem entsprechenden d-Magnetfluss liegt. Dieser Winkelbereich soll auch an anderen Stellen des vorliegenden Dokumentes zugrundegelegt werden, an welchen zwei Richtungen ebenfalls im Wesentlichen parallel zueinander ausgerichtet sein sollen oder eine Richtung Wesentlichen entlang einer anderen Richtung ausgerichtet sein soll.

Durch die Ausrichtung der leichten Richtung des anisotrop weichmagnetischen Materials im Wesentlichen entlang der jeweiligen d-Achse verringert sich der magnetische Widerstand für den d-Magnetfluss im Vergleich zu Materialien ohne magnetische Anisotropie. Der dadurch vergrößerte d-Magnetfluss geht einher mit einem größeren erreichbaren Drehmoment.

Alternativ oder zusätzlich kann vorgesehen sein, dass die schwere Richtung des anisotrop weichmagnetischen Materials zumindest abschnittsweise im Wesentlichen senkrecht zur jeweiligen d-Achse ausgerichtet ist.

Bei einer weiteren vorteilhaften Ausgestaltung der Erfindung ist die leichte Richtung des anisotrop weichmagnetischen Materials zumindest abschnittsweise im Wesentlichen senkrecht zu einer jeweiligen q-Achse ausgerichtet.

Zwischen der leichten Richtung und der während des Betriebs der elektrischen Maschine vorliegenden bzw. zu erwartenden, jeweiligen q-Achse bzw. dem entsprechenden q-Magnetfluss liegt somit vorzugsweise ein Winkel von 90°, insbesondere von 75° bis 90° bzw. von 50° bis 90°, wie oben erläutert.

Durch die Ausrichtung der leichten Richtung des anisotrop weichmagnetischen Materials im Wesentlichen senkrecht zur jeweiligen q-Achse vergrößert sich der magnetische Widerstand für den q-Magnetfluss im Vergleich zu Materialien ohne magnetische Anisotropie. Der vergrößerte q-Magnetfluss geht einher mit einer geringeren Ankerrückwirkung.

Alternativ oder zusätzlich kann vorgesehen sein, dass die schwere Richtung des anisotrop weichmagnetischen Materials zumindest abschnittsweise im Wesentlichen entlang einer jeweiligen q-Achse ausgerichtet ist.

Bei einer weiteren vorteilhaften Ausgestaltung der Erfindung sind das anisotrop weichmagnetische Material und die Mehrzahl von Permanentmagneten derart angeordnet, dass die leichte Richtung des anisotrop weichmagnetischen Materials im Wesentlichen senkrecht zu einem jeweiligen q-Magnetfluss, insbesondere am Ort des Eindringens des jeweiligen q-Magnetflusses in das anisotrop weichmagnetische Material bzw. in den Rotor, ist.

Zwischen der leichten Richtung und dem während des Betriebs der elektrischen Maschine vorliegenden bzw. zu erwartenden, jeweiligen q-Magnetfluss liegt somit vorzugsweise ein Winkel von 90°, insbesondere von 75° bis 90° bzw. von 50° bis 90°, wie oben erläutert.

Beispielsweise können das anisotrop weichmagnetischem Material und die Mehrzahl von Permanentmagneten derart angeordnet sein, dass der genannte Winkel lediglich am Ort des Eindringens des jeweiligen q-Magnetflusses in das anisotrop weichmagnetische Material bzw. in den Rotor vorliegt. Insbesondere wenn der Rotor an seiner radialen Außenfläche stets entweder die Permanentmagnete oder das anisotrop weichmagnetischem Material aufweist, sind der Ort des Eindringens des jeweiligen q-Magnetflusses in das anisotrop weich-magnetische Material und der Ort des Eindringens des jeweiligen q-Magnetflusses in den Rotor in der Regel identisch, so dass an diesem Ort der genannte Winkel vorliegen soll.

Weist der Rotor an seiner radialen Außenfläche jedoch neben Bereichen mit den Permanentmagneten und gegebenenfalls mit dem anisotrop weichmagnetischen Material noch zumindest einen weiteren Bereich auf, so kann vorgesehen sein, dass der genannte Winkel vorzugsweise am Ort des Eindringens des jeweiligen q-Magnetflusses in das anisotrop weich-magnetische Material vorliegt, wobei zusätzlich oder alternativ vorgesehen sein kann, dass der Winkel auch am Ort des Eindringens des jeweiligen q-Magnetflusses in den Rotor bzw. in den jeweiligen weiteren Bereich zu beobachten ist. Vorzugsweise dringt bei einem Rotor mit zumindest einem derartigen weiteren Bereich zumindest der überwiegende Teil des jeweiligen q-Magnetflusses mit dem genannten Winkel in das anisotrop weichmagnetische Material ein.

Ferner können das anisotrop weichmagnetischem Material und die Mehrzahl von Permanentmagneten derart angeordnet sein, dass sich der genannte Winkel stets entlang des sich einstellenden bzw. zu erwartenden, jeweiligen q-Magnetflusses innerhalb des anisotrop weichmagnetischen Materials beobachten lässt. Beispielsweise kann für den Rotor der zu erwartende bzw. vorliegende q-Magnetfluss, insbesondere durch Messung, Berechnung oder Simulation, ermittelt werden, wobei das anisotrop weichmagnetische Material derart ausgestaltet wird, dass insbesondere entlang eines Großteils oder des kompletten Weges des ermittelten q-Magnetflusses durch das anisotrop weichmagnetischem Material die leichte Richtung in dem genannten Winkel zum ermittelten q-Magnetfluss steht. Vorzugsweise wird das anisotrop weichmagnetische Material derart ausgestaltet, dass es entlang eines Großteils oder des kompletten Weges des ermittelten q-Magnetflusses durch den Rotor angeordnet ist.

Entsprechendes gilt für den Ort, an welchem der jeweilige q-Magnetfluss aus dem anisotrop weichmagnetischen Material bzw. aus dem Rotor austritt.

Dadurch, dass die leichte Richtung des anisotrop weichmagnetischen Materials im Wesentlichen senkrecht zum jeweiligen q-Magnetfluss ist, vergrößert sich der magnetische Widerstand für den q-Magnetfluss im Vergleich zu Materialien ohne magnetische Anisotropie. Der dadurch verringerte q-Magnetfluss geht einher mit einer verringerten Ankerrückwirkung. Alternativ oder zusätzlich kann vorgesehen sein, dass die schwere Richtung des anisotrop weichmagnetischen Materials im Wesentlichen entlang einem jeweiligen q-Magnetfluss ausgerichtet ist.

Bei einer weiteren vorteilhaften Ausgestaltung der Erfindung sind das anisotrop weichmagnetische Material und die Mehrzahl von Permanentmagneten derart angeordnet, dass die leichte Richtung des anisotrop weichmagnetischen Materials im Wesentlichen parallel zu einem jeweiligen d-Magnetfluss, insbesondere am Ort des Eindringens des jeweiligen d-Magnetflusses in das anisotrop weichmagnetische Material, ist.

Zwischen der leichten Richtung und dem während des Betriebs der elektrischen Maschine vorliegenden bzw. zu erwartenden, jeweiligen d-Magnetfluss liegt somit vorzugsweise ein Winkel von 0°, insbesondere von 0° bis 15° bzw. von 0° bis 40°, wie oben erläutert.

Beispielsweise können das anisotrop weichmagnetischem Material und die Mehrzahl von Permanentmagneten derart angeordnet sein, dass der genannte Winkel lediglich am Ort des Eindringens des jeweiligen d-Magnetflusses bzw. eines Großteils des jeweiligen d-Magnetflusses in das anisotrop weichmagnetische Material vorliegt. In der Regel sind die Permanentmagnete dabei derart angeordnet, dass der jeweilige d-Magnetfluss bzw. ein Großteils des jeweiligen d-Magnetflusses über die Permanentmagnete in den Rotor und eindringt anschließend nach radial innen in das anisotrop weichmagnetisches Material fortgesetzt wird. Insbesondere am Ort des Eindringens des jeweiligen d-Magnetflusses bzw. ein Großteils des jeweiligen d-Magnetflusses in das anisotrop weichmagnetische Material soll somit der genannte Winkel vorliegen.

Ferner können das anisotrop weichmagnetischem Material und die Mehrzahl von Permanentmagneten derart angeordnet sein, dass sich der genannte Winkel stets entlang des sich einstellenden bzw. zu erwartenden, jeweiligen d-Magnetflusses innerhalb des anisotrop weichmagnetischen Materials beobachten lässt. Beispielsweise kann für den Rotor der zu erwartende bzw. vorliegende d-Magnetfluss, insbesondere durch Messung, Berechnung oder Simulation, ermittelt werden, wobei das anisotrop weichmagnetische Material derart ausgestaltet wird, dass insbesondere entlang eines Großteils oder des kompletten Weges des ermittelten d-Magnetflusses durch das anisotrop weichmagnetischem Material die leichte Richtung in dem genannten Winkel zum ermittelten d-Magnetfluss steht. Vorzugsweise wird das anisotrop weichmagnetische Material derart ausgestaltet, dass es entlang eines Großteils oder des kompletten Weges des ermittelten d-Magnetflusses durch den Rotor angeordnet ist.

Entsprechendes gilt für den Ort, an welchem der jeweilige d-Magnetfluss aus dem anisotrop weichmagnetischen Material austritt.

Dadurch, dass die leichte Richtung des anisotrop weichmagnetischen Materials im Wesentlichen parallel zum jeweiligen d-Magnetfluss ist, verringert sich der magnetische Widerstand für den d-Magnetfluss im Vergleich zu Materialien ohne magnetische Anisotropie. Der dadurch vergrößerte d-Magnetfluss geht einher mit einem größeren erreichbaren Drehmoment.

Bei einer weiteren vorteilhaften Ausgestaltung der Erfindung weist der Rotor ein im Wesentlichen zylinderförmig ausgestaltetes Innenteil auf, welches ein weichmagnetisches oder amagnetisches Material umfasst, wobei ausgehend von dem zumindest einen Permanentmagnet des jeweiligen Magnetpols entlang einer jeweiligen d-Achse zum Innenteil hin das anisotrop weichmagnetische Material angeordnet ist, wobei die leichte Richtung des anisotrop weichmagnetischen Materials im Wesentlichen entlang der jeweiligen d-Achse ausgerichtet ist.

Das Innenteil kann beispielsweise ein Blechpaket aus gängigem Elektroblech aufweisen, wobei die Bleche in axialer Richtung gestapelt sind. Das Innenteil kann auch eine mittige Durchgangsbohrung aufweisen, so dass das Innenteil im Wesentlichen hohlzylinderförmig ausgestaltet ist.

Für jeden der Magnetpole ist zumindest ein jeweiliger Permanentmagnet vorgesehen, wobei jeweilige d-Achse in der Regel entlang einer jeweiligen Geraden angeordnet, auf welcher die Rotationsachse und der jeweilig Magnetpol liegen. Ausgehend vom jeweiligen Permanentmagneten ist nach radial innen das anisotrop weichmagnetische Material angeordnet, dessen leichte Richtung im Wesentlichen entlang der jeweiligen d-Achse ausgerichtet ist. Für jeden der Magnetpole kann dabei ein separater Bereich mit dem anisotrop weichmagnetischen Material vorgesehen sein. Dabei soll die leichte Richtung als im Wesentlichen entlang der jeweiligen d-Achse ausgerichtet gelten, wenn zwischen der leichten Richtung und der jeweiligen d-Achse ein Winkel von 0° bzw. von 0° bis 15°, insbesondere von 0° bis 40°, liegt. Insgesamt ergibt sich somit eine im Wesentlichen in radialer Richtung weisende leichte Richtung des anisotrop weichmagnetischen Materials für den jeweiligen Magnetpol. Insbesondere ist die leichte Richtung des jeweiligen Bereichs des einem jeweiligen Magnetpol zugeordneten anisotrop weichmagnetischen Materials parallel zur radialen Richtung bezüglich der Mitte des jeweiligen Bereichs in Umfangsrichtung betrachtet.

Eine derartige Anordnung des anisotrop weichmagnetischen Materials und des zumindest einen Permanentmagneten des jeweiligen Magnetpols bewirkt eine gute Führung des jeweiligen d-Magnetflusses entlang eines Weges mit vergleichsweise geringem magnetischem Widerstand innerhalb des Rotors. Somit werden vergleichsweise große erreichbare Drehmomente ermöglicht.

Vorzugsweise verbleibt in Umfangsrichtung zwischen den jeweiligen Magneten von zwei benachbarten Magnetpolen eine jeweilige Lücke, welche in radialer Richtung insbesondere bis zum im Wesentlichen zylinderförmigen Innenteil reicht. Somit wird jeweils ein Bereich mit dem anisotrop weichmagnetischen Material für jeden der Magnetpole gebildet, wobei jeweils zwei benachbarte Bereiche durch die jeweilige Lücke voneinander abgetrennt sind. Somit ragen die Magnetpole in radialer Richtung aus dem Rotor heraus, wohingegen die Lücken jeweils eine Art Einbuchtung des Rotors darstellen.

Die erläuterten Lücken bewirken bei einem derart ausgestalteten Rotor einen nochmals verringerten, jeweiligen q-Magnetfluss. Zum einen wird dies von der verringerten magnetischen Permeabilität für den jeweiligen q-Magnetfluss innerhalb des Rotors und zum anderen durch einen im Vergleich zum jeweiligen Magnetpol vergrößerten Luftspalt verursacht.

Bei einer Alternativen, vorteilhaften Ausgestaltung der Erfindung weist der Rotor ein Innenteil auf, welches ein weichmagnetisches oder amagnetisches Material umfasst, wobei das Innenteil senkrecht zur Rotationsachse betrachtet bei einem n-poligen Rotor im Wesentlichen den Querschnitt eines (2*n)-eckigen Polygons aufweist und n größer oder gleich vier ist, wobei das (2*n)-eckige Polygon im Wesentlichen ein regelmäßiges, n-eckiges Polygon ist, dessen n Ecken jeweils durch Fasen ersetzt wurden, so dass das (2*n)-eckige Polygon n lange Seiten und n kurze Seiten aufweist, wobei ausgehend von dem zumindest einen Permanentmagneten des jeweiligen Magnetpols entlang einer jeweiligen d-Achse zu einer jeweiligen langen Seite des Innenteils hin das anisotrop weichmagnetische Material angeordnet ist, wobei die leichte Richtung des anisotrop weichmagnetischen Materials im Wesentlichen entlang der jeweiligen d-Achse ausgerichtet ist.

Für einen vierpoligen Rotor weist das Innenteil somit den Querschnitt eines Achtecks auf. Das Polygon ist im Wesentlichen ein regelmäßiges, n-eckiges Polygon, wobei die Ecken des Polygons durch Fasen ersetzt wurden. Somit weist das Polygon n lange Seiten und n kurze Seiten auf, wobei die kurzen Seiten vorzugsweise den n Fasen entsprechen.

Die Mehrzahl von Permanentmagneten des jeweiligen Magnetpols sowie das jeweils zu-geordnete anisotrop weichmagnetische Material sind dabei nach außen in Verlängerung der n langen Seiten angeordnet, wohingegen die erläuterten Lücken zwischen den Magnetpolen an den n kurzen Seiten zu finden sind. Prinzipiell kann auch vorgesehen sein, die Mehrzahl von Permanentmagneten sowie das jeweils zugeordnete anisotrop weichmagnetische Material nach außen in Verlängerung der n kurzen Seiten anzuordnen.

Da der Rotor gemäß diesem Ausführungsbeispiel viele Ähnlichkeiten mit dem Rotor des vorangegangenen Ausführungsbeispiels aufweist, sei für weitere Details, insbesondere bezüglich des Magnetflusses, auf die Ausführungen zum vorangegangenen Ausführungsbeispiel verwiesen.

Bei einer alternativen vorteilhaften Ausgestaltung der Erfindung weist der Rotor ein Innenteil auf, welches ein weichmagnetisches oder amagnetisches Material umfasst, wobei das Innenteil senkrecht zur Rotationsachse betrachtet bei einem n-poligen Rotor im Wesentlichen den Querschnitt eines regelmäßigen, n-eckigen Polygons aufweist und n größer oder gleich vier ist, wobei das Innenteil derart angeordnet ist, dass eine jeweilige erste Verbindungslinie von der Rotationsachse zu einem jeweiligen Eckpunkt des senkrecht zur Rotationsachse betrachteten Polygons des Innenteils im Wesentlichen entlang der jeweiligen d-Achse ausgerichtet ist, wobei der zumindest eine Permanentmagnet des jeweiligen Magnetpols senkrecht zur Rotationsachse betrachtet radial außen im Anschluss an den jeweiligen Eckpunkt angeordnet ist, wobei radial außen im Anschluss an eine jeweilige radiale Außenfläche des Innenteils das anisotrop weichmagnetische Material angeordnet ist, wobei sich das anisotrop weichmagnetische Material in radialer Richtung bis zu dem zumindest einen Permanentmagneten des jeweiligen Magnetpols erstreckt, wobei die leichte Richtung des anisotrop weichmagnetischen Materials zwischen zwei benachbarten Eckpunkten jeweils im Wesentlichen entlang einer jeweiligen zweiten Verbindungslinie ausgerichtet ist, welche die beiden benachbarten Eckpunkte verbindet.

Das Innenteil kann beispielsweise ein Blechpaket aus gängigem Elektroblech aufweisen, wobei die Bleche in axialer Richtung gestapelt sind. Das Innenteil kann auch eine mittige Durchgangsbohrung aufweisen. Für einen Rotor mit zwei Polpaaren, d.h. vier Magnetpolen, weist das Innenteil im Wesentlichen den Querschnitt eines Quadrats auf, wobei allgemein bei einem n-poligen Rotor im Wesentlichen der Querschnitt eines regelmäßigen n-Ecks für das Innenteil vorgesehen ist. Entsprechend weist das Innenteil für einen Rotor mit drei bzw. vier Polpaaren im Wesentlichen den Querschnitt eines regelmäßigen Hexagons bzw. Oktagons auf.

Für das Beispiel eines quadratischen Querschnitts bei einem vierpoligen Rotor ist das Innenteil derart angeordnet, dass der jeweilige Eckpunkt des Quadrats von der Rotationsachse aus betrachtet entlang der jeweiligen d-Achse ausgerichtet ist. Da die jeweilige d-Achse in der Regel entlang einer jeweiligen Geraden angeordnet ist, auf welcher die Rotationsachse und der jeweilige Magnetpol liegen, ist auch der zumindest eine Permanentmagnet des jeweiligen Magnetpols radial außen im Anschluss an den jeweiligen Eckpunkt angeordnet. Entsprechendes gilt für Rotoren mit mehr als vier Polen.

Weiterhin ist vorgesehen, dass außen im Anschluss an die jeweilige Außenfläche des Innenteils das anisotrop weichmagnetische Material angeordnet ist, welches sich in radialer Richtung bis zu dem jeweiligen Permanentmagneten erstreckt. Für die jeweilige Außenfläche des Innenteils weist der Bereich mit dem anisotrop weichmagnetischen Material im Querschnitt durch die Rotationsachse betrachtet somit im Wesentlichen den Querschnitt eines Kreissegmentes auf. Das jeweilige Kreissegment wird dabei nach radial innen durch die Außenfläche des Innenteils begrenzt, welches die jeweilige Kreissehne darstellt. Nach radial außen wird das jeweilige Kreissegment durch den jeweiligen Permanentmagneten und/oder die Oberfläche des Rotors abgeschlossen. Für jedes der Kreissegmente ist dabei vorgesehen, dass die leichte Richtung des darin befindlichen anisotrop weichmagnetischen Materials im Wesentlichen entlang der jeweiligen Kreissehne ausgerichtet ist, so dass die jeweilige leichte Richtung im Wesentlichen senkrecht auf einer jeweiligen Winkelhalbierenden zwischen zwei benachbarten Magnetpolen steht.

Durch eine derartige Anordnung wird sichergestellt, dass der jeweilige d-Magnetfluss, welcher bei dem zumindest einen Permanentmagneten des jeweiligen Magnetpols in den Rotor ein- bzw. austritt, verlustarm durch den Rotor geleitet werden kann. Dies wird dadurch erreicht, dass das anisotrop weichmagnetische Material einen jeweiligen Verbindungsweg vom jeweiligen Magnetpol zu einem benachbarten Magnetpol bereitstellt, wobei der Rotor entlang des jeweiligen Verbindungsweges dank des anisotrop weichmagnetischen Materials und der Ausrichtung seiner leichten Richtung eine hohe magnetische Permeabilität aufweist. Gleichzeitig wird durch eine derartige Anordnung das Eindringen des jeweiligen q-Magnetflusses in den Rotor erschwert, da die leichte bzw. schwere Richtung des anisotrop weichmagnetischen Materials im Wesentlichen senkrecht bzw. parallel zum jeweiligen, zu erwartenden q-Magnetfluss ausgerichtet ist.

Bei einer weiteren vorteilhaften Ausgestaltung der Erfindung ist ein jeweiliger Polbereich aufweisend das anisotrop weichmagnetische Material vorgesehen, wobei der jeweilige Polbereich in radialer Richtung von dem zumindest einen Permanentmagneten des jeweiligen Magnetpols nach radial innen angeordnet ist, wobei die leichte Richtung des anisotrop weichmagnetischen Materials des jeweiligen Polbereichs im Wesentlichen entlang der jeweiligen d-Achse ausgerichtet ist, wobei zwischen zwei in Umfangsrichtung aufeinanderfolgend angeordneten Polbereichen jeweils ein Zwischenbereich aufweisend das anisotrop weichmagnetische Material angeordnet ist, wobei die leichte Richtung des anisotrop weichmagnetischen Materials des jeweiligen Zwischenbereichs im Wesentlichen senkrecht zur jeweiligen q-Achse ausgerichtet ist.

Für jeden der Magnetpole ist zumindest ein jeweiliger Permanentmagnet vorgesehen, wobei jeweilige d-Achse in der Regel entlang einer jeweiligen Geraden angeordnet, auf welcher die Rotationsachse und der jeweilige Magnetpol liegen. Ausgehend vom jeweiligen Permanentmagneten ist nach radial innen ein jeweiliger Polbereich mit dem anisotrop weichmagnetischen Material vorgesehen, dessen leichte Richtung im Wesentlichen entlang der jeweiligen d-Achse ausgerichtet ist. Dabei soll die leichte Richtung als im Wesentlichen entlang der jeweiligen d-Achse ausgerichtet gelten, wenn zwischen der leichten Richtung und der jeweiligen d-Achse ein Winkel von 0° bzw. von 0° bis 15°, insbesondere von 0° bis 40°, liegt. Insgesamt ergibt sich somit eine im Wesentlichen in radialer Richtung weisende leichte Richtung des anisotrop weichmagnetischen Materials für den jeweiligen Polbereich. Insbesondere ist die leichte Richtung des anisotrop weichmagnetischen Materials des jeweiligen Polbereichs parallel zur radialen Richtung bezüglich der in Umfangsrichtung betrachteten Mitte des jeweiligen Polbereichs.

Zwischen zwei benachbarten Polbereichen jeweils ein Zwischenbereich angeordnet, welcher das anisotrop weichmagnetische Material aufweist. Dabei ist die leichte Richtung des anisotrop weichmagnetischen Materials des jeweiligen Zwischenbereichs im Wesentlichen senkrecht zur jeweiligen q-Achse ausgerichtet, so dass zwischen der jeweiligen q-Achse und der jeweiligen leichten Richtung ein Winkel von 90° bzw. von 75° bis 90°, insbesondere von 50° bis 90°, liegt.

Alternativ oder zusätzlich kann vorgesehen sein, dass die schwere Richtung des anisotrop weichmagnetischen Materials des jeweiligen Zwischenbereichs im Wesentlichen entlang der jeweiligen q-Achse ausgerichtet ist, so dass zwischen der jeweiligen q-Achse und der jeweiligen schweren Richtung ein Winkel von 0° bzw. von 0° bis 15°, insbesondere von 0° bis 40°, liegt.

Derart ausgerichtete, jeweilige leichte bzw. schwere Richtungen der Polbereichen und der Zwischenbereiche bieten einem jeweiligen d-Magnetfluss einen Weg durch den Rotor mit vergleichsweise hoher magnetischer Permeabilität, wohingegen einem jeweiligen q-Magnetfluss ein Weg durch den Rotor mit vergleichsweise geringer magnetischer Permeabilität angeboten wird. Dies führt dazu, dass der jeweilige d-Magnetfluss verstärkt und der jeweilige q-Magnetfluss geschwächt wird.

Vorzugsweise erstreckt sich der jeweilige Zwischenbereich in radialer Richtung weniger weit nach außen als der jeweilige Polbereich und insbesondere als die jeweiligen Permanentmagnete. Somit verbleibt in Umfangsrichtung zwischen den jeweiligen Polbereichen eine jeweilige Nut. Somit ragen die Magnetpole in radialer Richtung aus dem Rotor heraus, wohingegen die Nuten jeweils eine Art Einbuchtung des Rotors darstellen.

Die erläuterten Nuten bewirken bei einem derart ausgestalteten Rotor einen nochmals verringerten, jeweiligen q-Magnetfluss. Zum einen wird dies von der verringerten magnetischen Permeabilität für den jeweiligen q-Magnetfluss innerhalb des Rotors und zum anderen durch einen im Vergleich zum jeweiligen Magnetpol vergrößerten Luftspalt verursacht.

Bei einer weiteren vorteilhaften Ausgestaltung der Erfindung ist das anisotrop weichmagnetische Material als ein oder mehrere Drahtbündel ausgestaltet.

Vorzugsweise sind die leichte Richtung dabei entlang des Drahtbündels und die schwere Richtung senkrecht zum Drahtbündel ausgerichtet. Durch die Ausgestaltung des anisotrop weichmagnetischen Materials als Drahtbündel ist eine besonders zielgerichtete Führung des jeweiligen d-Magnetflusses entlang des jeweiligen Drahtbündels möglich. Hingegen wird ein jeweiliger q-Magnetflusses senkrecht zu einem jeweiligen Drahtbündel besonders wirksam abgeschwächt.

Bei einer weiteren vorteilhaften Ausgestaltung der Erfindung weist das anisotrop weichmagnetische Material eine Sättigungsflussdichte von mindestens 1 T auf, wobei das anisotrop weichmagnetische Material alternativ oder zusätzlich eine Koerzitivfeldstärke von höchstens 10 kA/m, insbesondere von höchstens 1 kA/m, aufweist.

Derartige Eigenschaften des anisotrop weichmagnetischen Materials ermöglichen insbesondere den Einsatz von vergleichsweise kostengünstigen Permanentmagneten mit einem reduzierten Gehalt an schweren Seltenen Erden, wobei dennoch die Erzeugung eines ausreichend großen Drehmomentes ermöglicht wird.

Bei einer weiteren vorteilhaften Ausgestaltung der Erfindung ist die magnetische Permeabilität des anisotrop weichmagnetischen Materials entlang der leichten Richtung um zumindest eine Größenordnung, vorzugsweise um zumindest zwei Größenordnungen, größer als die magnetische Permeabilität des anisotrop weichmagnetischen Materials entlang der schweren Richtung.

Ein derartiges anisotrop weichmagnetisches Material erlaubt eine besonders vorteilhafte Ausgestaltung des Rotors, da die Stärkung des jeweiligen d-Magnetflusses und die Schwächung des jeweiligen q-Magnetflusses besonders ausgeprägt sind.

Vorzugsweise sind die leichte Richtung und die schwere Richtung im Wesentlichen senkrecht zueinander ausgerichtet, so dass zwischen der leichten Richtung und der schweren Richtung vorzugsweise ein Winkel von 90°, insbesondere von 75° bis 90° bzw. von 50° bis 90°, liegt.

Bei einer weiteren vorteilhaften Ausgestaltung der Erfindung umfasst das anisotrop weichmagnetische Material Neodym-Eisen-Bor.

Vorzugsweise weist der Rotor eine Hohlwelle auf.

Im Folgenden wird die Erfindung anhand der in den Figuren dargestellten Ausführungsbeispiele näher beschrieben und erläutert. Es zeigen:

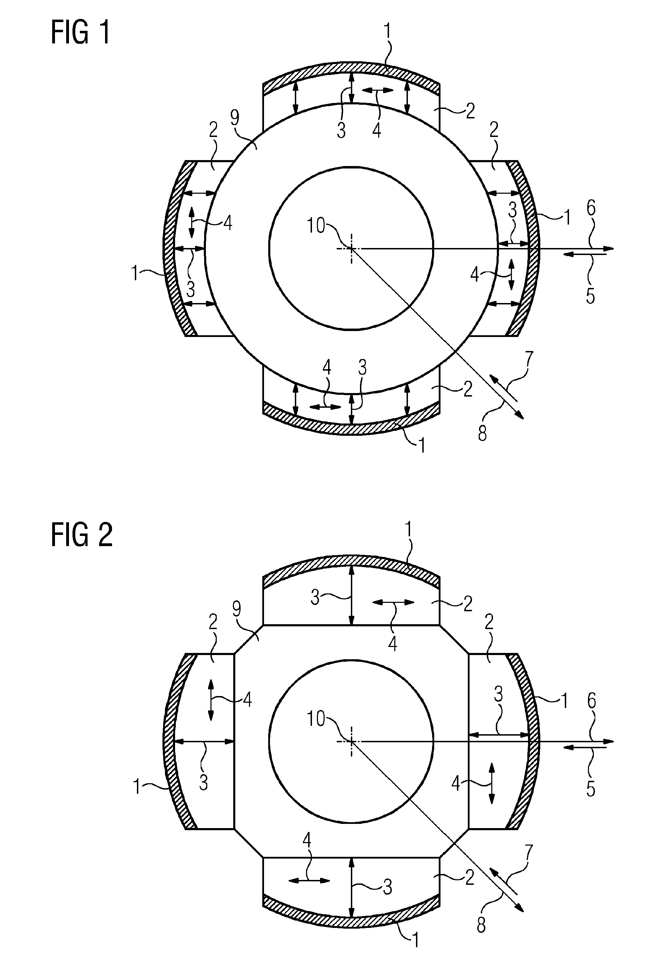

- FIG 1-5: einen Querschnitt eines ersten bis fünften Ausführungsbeispiels des erfindungsgemäßen Rotors.

Figur 1 zeigt einen Querschnitt eines ersten Ausführungsbeispiels des erfindungsgemäßen Rotors. Der Rotor ist um eine Rotationsachse 10 drehbar und weist an seiner radialen Außenfläche eine Mehrzahl von Permanentmagneten 1 zur Ausbildung von zwei Magnetpolpaaren auf. Radial weiter innen als die Mehrzahl von Permanentmagneten 1 weist der Rotor ein anisotrop weichmagnetisches Material 2 mit einer leichten Richtung 3 und einer schweren Richtung 4 auf. Im Rahmen des Ausführungsbeispiels ist je Magnetpol ein separater Bereich mit dem anisotrop weichmagnetischen Material 2 vorgesehen.

Wie in Figur 1 angedeutet, weist der Rotor für den jeweiligen Magnetpol eine d-Achse 6 und eine q-Achse 8 auf, welche auch direkte Achse bzw. Querachse genannt werden. Ein während des Betriebs der entsprechenden elektrischen Maschine vorliegender Magnetfluss kann entlang der der jeweiligen d- bzw. q-Achse in einen d- bzw. q-Magnetfluss komponentenweise zerlegt werden.

Als anisotrop weichmagnetische Materialien 2 können dabei Werkstoffe und Materialien eingesetzt werden, die zum einen eine Koerzitivfeldstärke von weniger als 100 kA/m aufweisen und zum anderen entlang ihrer leichten Richtung 3 eine höhere magnetische Permeabilität als entlang ihrer schweren Richtung 4 aufweisen. Vorzugsweise ist die schwere Richtung 4 dabei im Wesentlichen senkrecht zur leichten Richtung 3.

Der Rotor weist weiterhin ein im Wesentlichen zylinderförmig ausgestaltetes Innenteil 9 auf, welches ein weichmagnetisches oder amagnetisches Material umfasst. Beispielsweise kann das Innenteil 9 hohlzylinderförmig ausgestaltet sein, damit eine Hohlwelle aufgenommen werden kann. Das anisotrop weichmagnetische Material 2 ist ausgehend von dem oder den jeweiligen Permanentmagneten des jeweiligen Magnetpols entlang der jeweiligen d-Achse zum Innenteil 9 hin angeordnet, wobei die leichte Richtung 3 des anisotrop weichmagnetischen Materials 2 im Wesentlichen entlang der jeweiligen d-Achse ausgerichtet ist.

Insbesondere sind das anisotrop weichmagnetische Material 2 und die Mehrzahl von Permanentmagneten 1 derart angeordnet, dass der jeweilige d-Magnetfluss 5 entlang der jeweiligen d-Achse 6 verstärkt wird und der jeweilige q-Magnetfluss 7 entlang der jeweiligen q-Achse 8 geschwächt wird.

Im Rahmen des Ausführungsbeispiels verbleibt eine jeweilige Lücke zwischen den jeweiligen Permanentmagneten von zwei benachbarten Magnetpolen, wobei die jeweilige Lücke in radialer Richtung zum zylinderförmigen Innenteil 9 reicht. Entsprechend ragen die Magnetpole in radialer Richtung aus dem Rotor heraus, wohingegen die Lücken jeweils eine Art Einbuchtung des Rotors darstellen.

Figur 2 zeigt einen Querschnitt eines zweiten Ausführungsbeispiels des erfindungsgemäßen Rotors. Da das zweite Ausführungsbeispiel einige Ähnlichkeiten mit dem ersten Ausführungsbeispiel aufweist, werden lediglich einige Unterschiede erläutert. Gleiche Bezugszeichen wie in Figur 1 bezeichnen dabei gleiche Gegenstände.

Im Unterschied zum ersten Ausführungsbeispiel weist das Innenteil 9 des zweiten Ausführungsbeispiels den Querschnitt eines Oktagons auf. Das Oktagon ist im Wesentlichen quadratisch, wobei die Ecken des Quadrats durch Fasen ersetzt wurden. Somit weist das Oktagon vier lange Seiten und vier kurze Seiten auf, wobei die kurzen Seiten den vier Fasen entsprechen.

Die Mehrzahl von Permanentmagneten 1 des jeweiligen Magnetpols sowie das jeweils zugeordnete anisotrop weichmagnetische Material 2 sind dabei nach außen in Verlängerung der vier langen Seiten angeordnet, wohingegen die erläuterten Lücken zwischen den Magnetpolen an den vier kurzen Seiten zu finden sind.

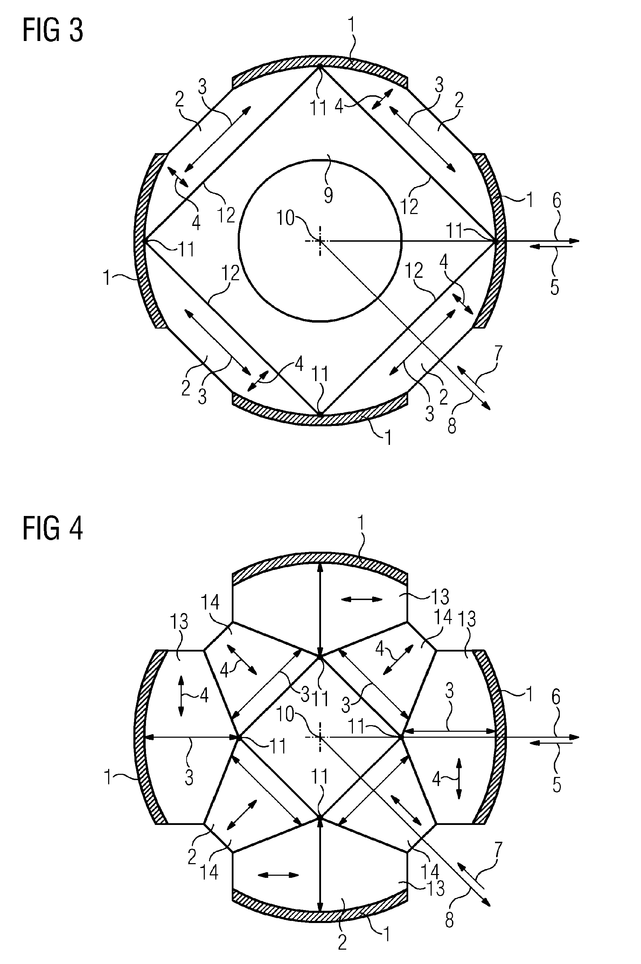

Figur 3 zeigt einen Querschnitt eines dritten Ausführungsbeispiels des erfindungsgemäßen Rotors. Der Rotor ist um eine Rotationsachse 10 drehbar und weist an seiner radialen Außenfläche eine Mehrzahl von Permanentmagneten 1 zur Ausbildung von zwei Magnetpolpaaren auf. Radial weiter innen als die Mehrzahl von Permanentmagneten 1 weist der Rotor ein anisotrop weichmagnetisches Material 2 mit einer leichten Richtung 3 und einer schweren Richtung 4 auf.

Weiterhin weist der Rotor ein Innenteil 9 auf, welches ein weichmagnetisches oder amagnetisches Material umfasst. Beispielsweise kann das Innenteil 9 eine entlang der Rotationsachse 10 verlaufende Bohrung zur Aufnahme einer Hohlwelle aufweisen. Senkrecht zur Rotationsachse 10 betrachtet weist das Innenteil 9 für den vorliegenden vierpoligen Rotor im Wesentlichen den Querschnitt eines Quadrats, also eines regelmäßigen viereckigen Polygons, auf.

Das Innenteil 9 ist derart angeordnet, dass eine jeweilige erste Verbindungslinie von der Rotationsachse 10 zu einem jeweiligen Eckpunkt 11 des Quadrats des Innenteils 9 im Wesentlichen entlang der jeweiligen d-Achse 6 ausgerichtet ist, wobei der zumindest eine Permanentmagnet 1 des jeweiligen Magnetpols senkrecht zur Rotationsachse 10 betrachtet radial außen im Anschluss an den jeweiligen Eckpunkt 11 angeordnet ist.

Radial außen im Anschluss an eine jeweilige radiale Außenfläche 12 des Innenteils 9 ist das anisotrop weichmagnetische Material 2 angeordnet, wobei sich das anisotrop weichmagnetische Material 2 in radialer Richtung zu dem zumindest einen Permanentmagneten 1 des jeweiligen Magnetpols erstreckt. Die leichte Richtung 3 des anisotrop weichmagnetischen Materials ist zwischen zwei benachbarten Eckpunkten 11 jeweils im Wesentlichen entlang einer jeweiligen zweiten Verbindungslinie ausgerichtet, welche die beiden benachbarten Eckpunkte 11 verbindet.

Vorzugsweise ist die leichte Richtung 3 des anisotrop weichmagnetischen Materials 2 somit zwischen zwei benachbarten Magnetpolen im Wesentlichen senkrecht zur jeweiligen q-Achse ausgerichtet, wohingegen die schwere Richtung 4 im Wesentlichen parallel zur jeweiligen q-Achse ausgerichtet ist.

Figur 4 zeigt einen Querschnitt eines vierten Ausführungsbeispiels des erfindungsgemäßen Rotors. Der Rotor ist um eine Rotationsachse 10 drehbar und weist an seiner radialen Außenfläche eine Mehrzahl von Permanentmagneten 1 zur Ausbildung von zwei Magnetpolpaaren auf. Radial weiter innen als die Mehrzahl von Permanentmagneten 1 weist der Rotor ein anisotrop weichmagnetisches Material 2 mit einer leichten Richtung 3 und einer schweren Richtung 4 auf.

Der Rotor weist einen jeweiligen Polbereich 13 aufweisend das anisotrop weichmagnetische Material 2 auf, wobei der jeweilige Polbereich 13 in radialer Richtung von dem zumindest einen Permanentmagneten 1 des jeweiligen Magnetpols nach radial innen angeordnet ist. Die leichte Richtung 3 des anisotrop weichmagnetischen Materials 2 des jeweiligen Polbereichs 13 ist im Wesentlichen entlang der jeweiligen d-Achse 6 ausgerichtet.

Zwischen zwei in Umfangsrichtung aufeinander folgend angeordneten Polbereichen 13 ist jeweils ein Zwischenbereich 14 angeordnet, welcher das anisotrop weichmagnetische Material 2 aufweist. Die leichte Richtung 3 des anisotrop weichmagnetischen Materials 2 des jeweiligen Zwischenbereichs 14 ist im Wesentlichen senkrecht zur jeweiligen q-Achse 8 ausgerichtet.

Vorzugsweise erstreckt sich der jeweilige Polbereich 13 mit den jeweiligen Permanentmagneten 1 in radialer Richtung weiter nach außen als der jeweilige Zwischenbereich 14, wie in Figur 4 angedeutet. Somit verbleibt in Umfangsrichtung zwischen den jeweiligen Polbereichen eine jeweilige Nut.

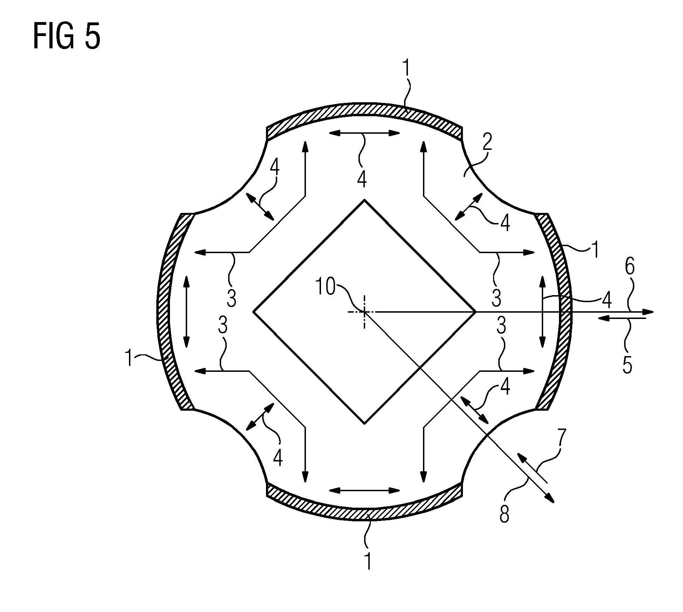

Figur 5 zeigt einen Querschnitt eines fünften Ausführungsbeispiels des erfindungsgemäßen Rotors. Das fünfte Ausführungsbeispiel weist einige Ähnlichkeiten mit dem vierten Ausführungsbeispiel auf. Beim Rotor gemäß dem fünften Ausführungsbeispiels sind die jeweiligen Polbereiche 13 und Zwischenbereiche 14 nicht strikt voneinander getrennt, sondern gehen vielmehr ineinander über. Entsprechend ist das anisotrop weichmagnetische Material 2 derart ausgestaltet, dass auch die leichte Richtung 3 zwischen zwei benachbarten Magnetpolen einen im Wesentlichen kontinuierlichen Verlauf aufweist. Beispielsweise verläuft die jeweilige leichte Richtung 3 im Bereich der jeweiligen q-Achse 8 im Wesentlichen senkrecht zur jeweiligen q-Achse 8 und geht zur jeweiligen d-Achse 6 über in eine Ausrichtung im Wesentlichen entlang der jeweiligen d-Achse 6.

Zusammenfassend betrifft die Erfindung einen Rotor für eine elektrische Maschine, wobei der Rotor um eine Rotationsachse drehbar ist und wobei der Rotor an seiner radialen Außenfläche eine Mehrzahl von Permanentmagneten zur Ausbildung von zumindest einem Magnetpolpaar, vorzugsweise zwei oder mehr Magnetpolpaaren, aufweist. Weiterhin betrifft die Erfindung eine elektrische Maschine aufweisend einen derartigen Rotor. Um die Ankerrückwirkung bei einer elektrischen Maschine aufweisend einen derartigen Rotor zu reduzieren, wird vorgeschlagen, dass der Rotor radial weiter innen als die Mehrzahl von Permanentmagneten zumindest abschnittweise ein anisotrop weichmagnetisches Material mit einer leichten Richtung und einer schweren Richtung aufweist.

## Patentansprüche

1. Rotor für eine elektrische Maschine,
wobei der Rotor um eine Rotationsachse (10) drehbar ist und wobei der Rotor an seiner radialen Außenfläche eine Mehrzahl von Permanentmagneten (1) zur Ausbildung von zumindest einem Magnetpolpaar, vorzugsweise zwei oder mehr Magnetpolpaaren, aufweist,
**dadurch gekennzeichnet, dass**
der Rotor radial weiter innen als die Mehrzahl von Permanentmagneten (1) zumindest abschnittweise ein anisotrop weichmagnetisches Material (2) mit einer leichten Richtung (3) und einer schweren Richtung (4) aufweist.

2. Rotor nach Anspruch 1,
wobei das anisotrop weichmagnetische Material (2) und die Mehrzahl von Permanentmagneten (1) derart angeordnet sind, dass
- ein jeweiliger d-Magnetfluss (5) entlang einer jeweiligen d-Achse (6) verstärkt wird und
- ein jeweiliger q-Magnetfluss (7) entlang einer jeweiligen q-Achse (8) geschwächt wird.

3. Rotor nach einem der vorhergehenden Ansprüche,
wobei die leichte Richtung (3) des anisotrop weichmagnetischen Materials (2) zumindest abschnittsweise im Wesentlichen entlang einer jeweiligen d-Achse (6) ausgerichtet ist.

4. Rotor nach einem der vorhergehenden Ansprüche,
wobei die leichte Richtung (3) des anisotrop weichmagnetischen Materials (2) zumindest abschnittsweise im Wesentlichen senkrecht zu einer jeweiligen q-Achse (8) ausgerichtet ist.

5. Rotor nach einem der vorhergehenden Ansprüche,
wobei das anisotrop weichmagnetische Material (2) und die Mehrzahl von Permanentmagneten (1) derart angeordnet sind, dass die leichte Richtung (3) des anisotrop weichmagnetischen Materials (2) im Wesentlichen senkrecht zu einem jeweiligen q-Magnetfluss (7), insbesondere am Ort des Eindringens des jeweiligen q-Magnetflusses (7) in das anisotrop weichmagnetische Material (2) bzw. in den Rotor, ist.

6. Rotor nach einem der vorhergehenden Ansprüche,
wobei das anisotrop weichmagnetische Material (2) und die Mehrzahl von Permanentmagneten (1) derart angeordnet sind, dass die leichte Richtung (3) des anisotrop weichmagnetischen Materials (2) im Wesentlichen parallel zu einem jeweiligen d-Magnetfluss (5), insbesondere am Ort des Eindringens des jeweiligen d-Magnetflusses (5) in das anisotrop weichmagnetische Material (2) bzw. in den Rotor, ist.

7. Rotor nach einem der vorhergehenden Ansprüche,
wobei der Rotor ein im Wesentlichen zylinderförmig ausgestaltetes Innenteil (9) aufweist, welches ein weichmagnetisches oder amagnetisches Material (2) umfasst,
wobei ausgehend von dem zumindest einen Permanentmagneten (1) des jeweiligen Magnetpols entlang einer jeweiligen d-Achse (6) zum Innenteil (9) hin das anisotrop weichmagnetische Material (2) angeordnet ist,
wobei die leichte Richtung (3) des anisotrop weichmagnetischen Materials (2) im Wesentlichen entlang der jeweiligen d-Achse (6) ausgerichtet ist.

8. Rotor nach einem der Ansprüche 1-6,
wobei der Rotor ein Innenteil (9) aufweist, welches ein weichmagnetisches oder amagnetisches Material umfasst,
wobei das Innenteil (9) senkrecht zur Rotationsachse (10) betrachtet bei einem n-poligen Rotor im Wesentlichen den Querschnitt eines (2*n)-eckigen Polygons aufweist und n größer oder gleich vier ist,
wobei das (2*n)-eckige Polygon im Wesentlichen ein regelmäßiges, n-eckiges Polygon ist, dessen n Ecken jeweils durch Fasen ersetzt wurden, so dass das (2*n)-eckige Polygon n lange Seiten und n kurze Seiten aufweist,
wobei ausgehend von dem zumindest einen Permanentmagneten (1) des jeweiligen Magnetpols entlang einer jeweiligen d-Achse (6) zu einer jeweiligen langen Seite des Innenteils (9) hin das anisotrop weichmagnetische Material (2) angeordnet ist, wobei die leichte Richtung (3) des anisotrop weichmagnetischen Materials (2) im Wesentlichen entlang der jeweiligen d-Achse (6) ausgerichtet ist.

9. Rotor nach einem der Ansprüche 1-6,
wobei der Rotor ein Innenteil (9) aufweist, welches ein weichmagnetisches oder amagnetisches Material umfasst,
wobei das Innenteil (9) senkrecht zur Rotationsachse (10) betrachtet bei einem n-poligen Rotor im Wesentlichen den Querschnitt eines regelmäßigen, n-eckigen Polygons aufweist und n größer oder gleich vier ist,
wobei das Innenteil (9) derart angeordnet ist, dass eine jeweilige erste Verbindungslinie von der Rotationsachse (10) zu einem jeweiligen Eckpunkt (11) des senkrecht zur Rotationsachse (10) betrachteten Polygons des Innenteils (9) im Wesentlichen entlang der jeweiligen d-Achse (6) ausgerichtet ist,
wobei der zumindest eine Permanentmagnet (1) des jeweiligen Magnetpols senkrecht zur Rotationsachse (10) betrachtet radial außen im Anschluss an den jeweiligen Eckpunkt (11) angeordnet ist,
wobei radial außen im Anschluss an eine jeweilige radiale Außenfläche (12) des Innenteils (9) das anisotrop weichmagnetische Material (2) angeordnet ist,
wobei sich das anisotrop weichmagnetische Material (2) in radialer Richtung bis zu dem zumindest einen Permanentmagneten (1) des jeweiligen Magnetpols erstreckt,
wobei die leichte Richtung (3) des anisotrop weichmagnetischen Materials (2) zwischen zwei benachbarten Eckpunkten (11) jeweils im Wesentlichen entlang einer jeweiligen zweiten Verbindungslinie ausgerichtet ist, welche die beiden benachbarten Eckpunkte (11) verbindet.

10. Rotor nach einem der vorhergehenden Ansprüche,
wobei ein jeweiliger Polbereich (13) aufweisend das anisotrop weichmagnetische Material (2) vorgesehen ist,
wobei der jeweilige Polbereich (13) in radialer Richtung von dem zumindest einen Permanentmagneten (1) des jeweiligen Magnetpols nach radial innen angeordnet ist,
wobei die leichte Richtung (3) des anisotrop weichmagnetischen Materials (2) des jeweiligen Polbereichs (13) im Wesentlichen entlang der jeweiligen d-Achse (6) ausgerichtet ist,
wobei zwischen zwei in Umfangsrichtung aufeinanderfolgend angeordneten Polbereichen (13) jeweils ein Zwischenbereich (14) aufweisend das anisotrop weichmagnetische Material (2) angeordnet ist,
wobei die leichte Richtung (3) des anisotrop weichmagnetischen Materials (2) des jeweiligen Zwischenbereichs (14) im Wesentlichen senkrecht zur jeweiligen q-Achse (8) ausgerichtet ist.

11. Rotor nach einem der vorhergehenden Ansprüche,
wobei das anisotrop weichmagnetische Material (2) als ein oder mehrere Drahtbündel ausgestaltet ist.

12. Rotor nach einem der vorhergehenden Ansprüche,
wobei das anisotrop weichmagnetische Material (2) eine Sättigungsflussdichte von mindestens 1 T aufweist und/oder wobei das anisotrop weichmagnetische Material (2) eine Koerzitivfeldstärke von höchstens 10 kA/m, insbesondere von höchstens 1 kA/m, aufweist.

13. Rotor nach einem der vorhergehenden Ansprüche,
wobei die magnetische Permeabilität des anisotrop weichmagnetischen Materials (2) entlang der leichten Richtung (3) um zumindest eine Größenordnung, vorzugsweise um zumindest zwei Größenordnungen, größer ist als die magnetische Permeabilität des anisotrop weichmagnetischen Materials (2) entlang der schweren Richtung (4).

14. Rotor nach einem der vorhergehenden Ansprüche,
wobei das anisotrop weichmagnetische Material (2) Neodym-Eisen-Bor umfasst.

15. Elektrische Maschine aufweisend einen Rotor gemäß einem der vorhergehenden Ansprüche.
